# EUROPEAN PATENT APPLICATION

(11) **EP 2 626 570 A1**
(43) Date of publication of application: **14.08.2013**
(21) Application number: 12171776.3
(22) Date of filing: 13.06.2012
(51) Int. Cl.: F04D 29/02, B29C 45/50, F04D 29/28

(54) **Impeller for electric blower and apparatus for manufacturing the same**

(30) Priority: 09.02.2012 KR 20120013341
(71) Applicant: Samsung Electro-Mechanics Co., Ltd, Suwon Gyunggi-do 443-743 (KR)
(72) Inventor: Lee, Joo Young, 443-743 Gyunggi-do (KR); Bae, Han Kyung, 443-743 Gyunggi-do (KR); Seok, Jin Su, 443-743 Gyunggi-do (KR); Park, Chang Hwan, 443-743 Gyunggi-do (KR); Yoon, Hee Soo, 443-743 Gyunggi-do (KR); Yoon, Young Bok, 443-743 Gyunggi-do (KR)
(74) Representative: Heine, Christian Klaus

(57) **Abstract**

Disclosed herein is an impeller for an electric blower, including: a top plate with an insertion groove; and a bottom plate formed integrally with a blade, wherein a blade coupled portion corresponding to the insertion groove of the top plate is formed in the blade and the blade coupled portion is inserted and coupled into the insertion groove of the top plate.

## Description

### BACKGROUND OF THE INVENTION

### 1. Technical Field

The present invention relates to an impeller for an electric blower and an apparatus for manufacturing the same.

### 2. Description of the Related Art

In general, an impeller for an electric blower is used in connection with a motor in order to suction a fluid. More particularly, a fan-motor for a vacuum cleaner has an impeller which is a centrifugal fan for suctioning air provided in an upper part thereof and the impeller rotates in connection with a rotational shaft of a driving motor.

However, an impeller in the related art includes a top plate, a bottom plate, and a blade like a patent document disclosed in a cited document below, but the top plate, the bottom plate, and the blade are separated manufactured and combined with each other, such that stress by centrifugal force and atmospheric pressure concentrates on a combination portion while rotating, and as a result, the combination portion is damaged due to stress concentration during high-speed rotation.

Moreover, as the impeller in the related art is manufactured by an injection molded product made of an aluminum material, a prime material cost increases and production efficiency also deteriorates as well as a facility investment cost increases.

### [Related Art Document]

### [Patent Document]

(Patent Document 1) JP2003-269391 A

### SUMMARY OF THE INVENTION

A first aspect of the present invention has been made in an effort to provide an impeller for an electric blower in which a top plate is coupled to a blade integrated bottom plate, such that a manufacturing process is simple and productivity increases and the impeller is manufactured by a thermoplastic material, such that a production cost is reduced and a second aspect of the present invention has been made in an effort to provide an impeller for an electric blower in which as a bottom plate, a blade, and a top plate are integrally injection-molded, stress concentration is reduced and rigidity of the impeller is improved, and an apparatus for manufacturing the same.

According to a first preferred embodiment of the present invention, there is provided an impeller for an electric blower, including: a top plate with an insertion groove; and a bottom plate formed integrally with a blade, wherein a blade coupled portion corresponding to the insertion groove of the top plate is formed in the blade and the blade coupled portion is inserted and coupled into the insertion groove of the top plate.

Further, the blade coupled portion may be larger than the height of the blade erected from the bottom plate by the thickness of the top plate.

The top plate and the bottom plate may be made by selecting any one of PA, PEEK, PPS, PET, PP, PPA, FRPP, PC, and PC+ABS which are thermoplastic resins.

The top plate and the bottom plate may be fixed to each other by inserting and coupling the blade coupled portion into the insertion groove of the top plate and fusing them.

According to a second preferred embodiment of the present invention, there is provided an impeller for an electric blower, including: a top plate; a blade; and a bottom plate, wherein the top plate, the blade, and the bottom plate are integrally injection-molded.

The top plate, the blade, and the bottom plate may be made by selecting any one of PA, PEEK, PPS, PET, PP, PPA, FRPP, PC, and PC+ABS which are thermoplastic resins.

According to a third preferred embodiment of the present invention, there is provided an apparatus for manufacturing the impeller for an electric blower according to the second preferred embodiment of the present invention, including: molds corresponding to shapes of a top plate, a bottom plate, and a blade of the impeller for an electric blower and connected with each other; a cylinder connected to supply a raw material to the molds; a screw provided in the cylinder; a hopper connected to supply the raw material to the cylinder; and a hydraulic motor for rotating the screw.

The mold may include: a top plate forming portion corresponding to the top plate of the impeller for an electric blower; a bottom plate forming portion corresponding to the bottom plate of the impeller for an electric blower; and a blade forming portion corresponding to the blade for the impeller for an electric blower, wherein the top plate forming portion and the bottom plate forming portion are connected to each other by the blade forming portion.

A heater for supplying a raw material supplied from the hopper to the mold in a melted state may be mounted on an outer periphery of the cylinder.

The raw material may be made by selecting any one of PA, PEEK, PPS, PET, PP, PPA, FRPP, PC, and PC+ABS which are thermoplastic resins.

A backflow prevention tab may be formed on an inner periphery of the cylinder to protrude toward the screw so as to be adjacent to one end portion of the screw opposite to the mold.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view schematically showing an impeller for an electric blower according to a first preferred embodiment of the present invention;

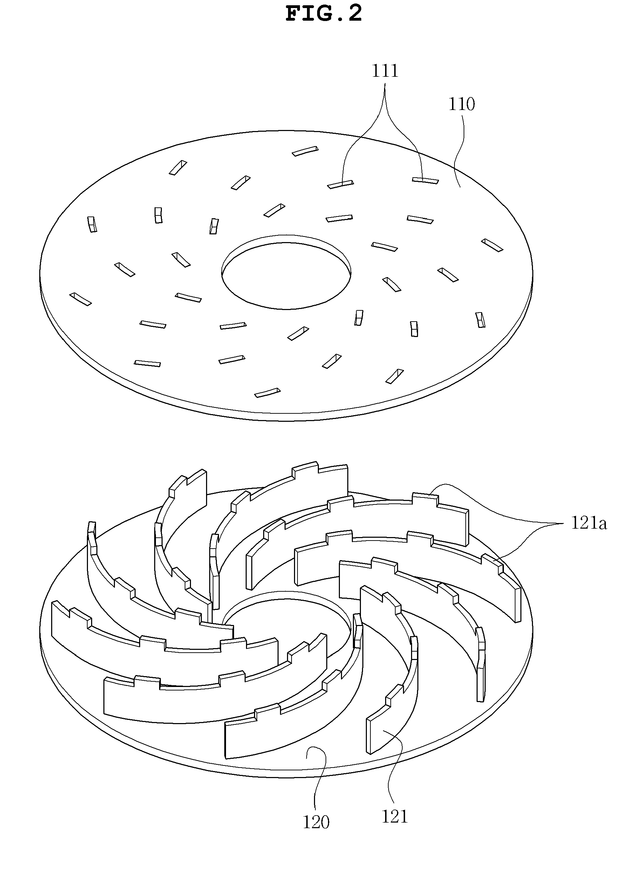

FIG. 2 is a schematic exploded perspective view of the impeller for an electric blower shown in FIG. 1;
FIG. 3 is a schematic cross-sectional view of the impeller for an electric blower shown in FIG. 1;
FIG. 4 is a perspective view schematically showing an impeller for an electric blower according to a second preferred embodiment of the present invention; and
FIG. 5 is a cross-sectional view schematically showing an injection-molding apparatus which is an apparatus for manufacturing the impeller for an electric blower according to the second preferred embodiment of the present invention.

### DESCRIPTION OF THE PREFERRED EMBODIMENTS

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first", "second", "one side", "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.

Hereinafter, preferred embodiments of the present invention will be described in detail with reference to the attached drawings.

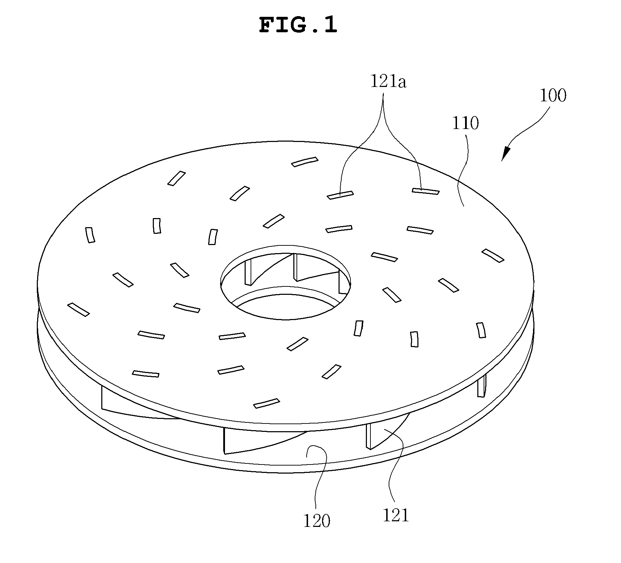

FIG. 1 is a perspective view schematically showing an impeller for an electric blower according to a first preferred embodiment of the present invention. As shown in the figure, the impeller 100 for an electric blower includes a top plate 110 and a bottom plate 120 and the bottom plate 120 is formed integrally with a blade 121.

More particularly, the top plate 110 and the bottom plate 120 are made of a thermoplastic resin and each plate is manufactured by injection molding.

Further, an insertion groove 111 for inserting and coupling the blade 121 of the bottom plate 120 is formed on the top plate 110.

In addition, a blade coupled portion 121a is formed in the blade 121 so that the blade 121 is inserted and coupled into the insertion groove 111 of the top plate 110 and the blade coupled portion 121a is larger than the height of the blade which is erected from the bottom plate 120 by the thickness of the top plate 110.

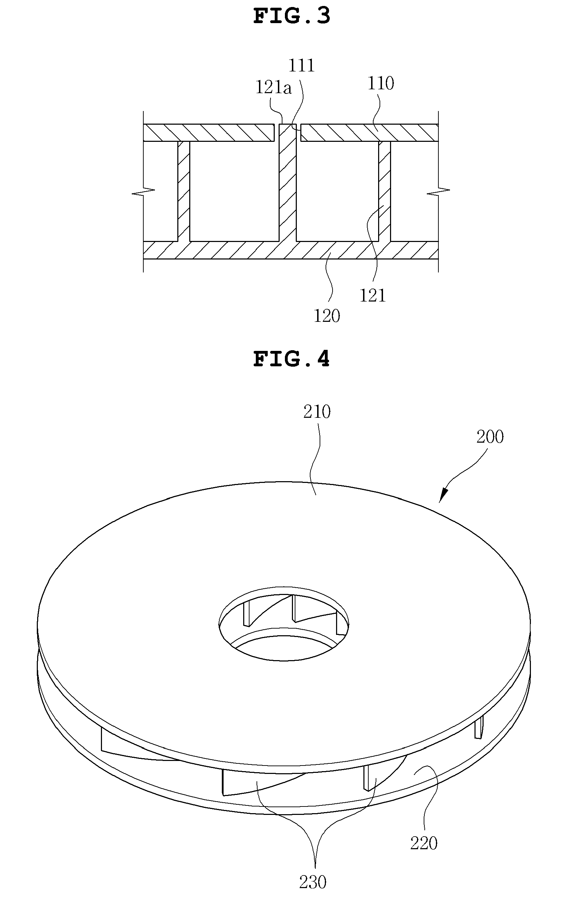

As the blade 122 is formed as above, in the impeller 110 for an electric blower according to the first preferred embodiment of the present invention, when the blade coupled portion 121a of the bottom plate 120 is inserted into the insertion groove 111 of the top plate 110 to couple the top plate 110 and the bottom plate 120 with each other as shown in FIG. 3, the blade coupled portion 121a which is formed integrally with the bottom plate 120 does not protrude to the outside of the top plate 110 but the top plate 110 may be formed as one surface.

Next, the top plate 110 and the bottom plate 120 are fixed to each other by fusion and the impeller 100 according to the first preferred embodiment of the present invention is manufactured.

As described above, the top plate 110 and the bottom plate 120 forming the impeller 100 according to the first preferred embodiment of the present invention are made of the thermoplastic resin. More particularly, the top plate 110 and the bottom plate 120 may be made by selecting any one of PA, PEEK, PPS, PET, PP, PPA, FRPP, PC, and PC+ABS. This considers a melting point for rigidity and fusion of the impeller.

FIG. 4 is a perspective view schematically showing an impeller for an electric blower according to a second preferred embodiment of the present invention. The impeller 200 includes a top plate 210, a bottom plate 220, and a blade 230 and the impeller 200 is formed by integrally injection-molding the top plate 210, the bottom plate 220, and the blade 230.

In addition, the impeller 200 is manufactured by the thermoplastic resin in order to be formed integrally by the injection molding. More particularly, the impeller 200 may be made by selecting any one of PA, PEEK, PPS, PET, PP, PPA, FRPP, PC, and PC+ABS. This considers a melting point for rigidity and fusion of the impeller.

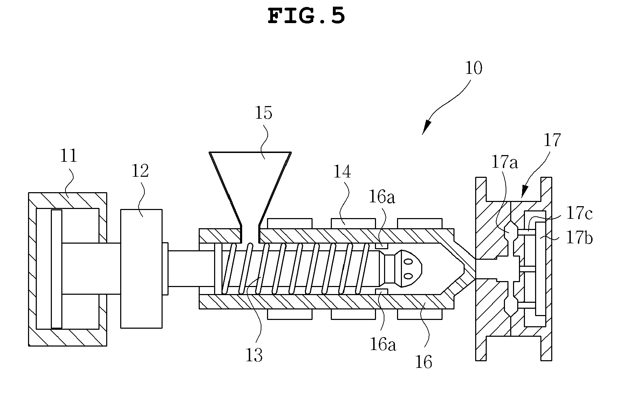

FIG. 5 is a cross-sectional view schematically showing an injection-molding apparatus which is an apparatus for manufacturing the impeller for an electric blower according to the second preferred embodiment of the present invention. As described above, in the impeller 200 for an electric blower according to the second preferred embodiment, the top plate 210, the bottom plate 220, and the blade 230 are integrally injection-molded.

An injection molding apparatus 10 of the impeller for an electric blower for this includes a hydraulic cylinder 11, a hydraulic motor 12, a screw 13, a heater 14, a hopper 15, a cylinder 16, and a mold 17.

More particularly, the mold 17 has a shape corresponding to the impeller 200 for an electric blower according to the second preferred embodiment of the present invention, that is, is formed by connecting the top plate, the bottom plate, and the blade which are formed integrally with each other.

That is, the mold 17 includes a top plate forming portion 17a corresponding to the top plate 210, a bottom plate forming portion 17b corresponding to the bottom plate 220, and a blade forming portion 17c corresponding to the blade 230. The top plate forming portion 17a and the bottom plate forming portion 17b are connected to each other by the blade forming portion 17c.

Further, a cylinder 16 is connected to the mold 17 in order to supply a raw material to the mold 17 and a screw 13 is provided in the cylinder 16.

In addition, a backflow prevention tab 16a protrudes toward the screw on an inner periphery of the cylinder 16 to be adjacent to one end portion of the screw 13 opposite to the mold and the backflow prevention tab 16a prevents the raw material supplied to the mold 17 through the screw 13 from flowing back.

Further, a hopper 15 for supplying the raw material is connected to the cylinder 16 and the heater 14 for providing the supplied raw material to the mold 17 in a melted state is mounted on an outer periphery of the cylinder 16.

In addition, the hydraulic motor 12 for rotating the screw is connected to the other end portion of the screw 13 and the hydraulic cylinder 11 for driving the hydraulic motor 12 is connected to the hydraulic motor 12.

Moreover, when the raw material of the thermoplastic resin as the material of the impeller is supplied to the hopper 15, the raw material is gradually injected into the hopper 15 through the screw 13 positioned in the cylinder 16 and after the raw material is cooled for a predetermined time, the raw material is ejected from the mold 17, and as a result, the impeller 200 for an electric blower according to the second preferred embodiment of the present invention is completed.

Therefore, as the impeller 200 for an electric blower according to the second preferred embodiment is achieved by integrally injection-molding the top plate 210, the bottom plate 220, and the blade 230 with each other, such that a manufacturing process is simple and the impeller 200 is manufactured by a thermoplastic resin material, such that a production cost is reduced, stress concentration is reduced, and rigidity of the impeller is improved.

According to preferred embodiments of the present invention, an impeller for an electric blower in which a top plate is coupled to a blade integrated bottom plate, such that a manufacturing process is simple and productivity increases and the impeller is manufactured by a thermoplastic material, such that a production cost is reduced can be acquired and an impeller for an electric blower in which as a bottom plate, a blade, and a top plate are integrally injection-molded, stress concentration is reduced and rigidity of the impeller is improved, and an apparatus for manufacturing the same can be acquired.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. An impeller for an electric blower, comprising:
a top plate with an insertion groove; and
a bottom plate formed integrally with a blade,
wherein a blade coupled portion corresponding to the insertion groove of the top plate is formed in the blade and the blade coupled portion is inserted and coupled into the insertion groove of the top plate.

2. The impeller for an electric blower as set forth in claim 1, wherein the blade coupled portion is larger than the height of the blade erected from the bottom plate by the thickness of the top plate.

3. The impeller for an electric blower as set forth in claim 1, wherein the top plate and the bottom plate are made by selecting any one of PA, PEEK, PPS, PET, PP, PPA, FRPP, PC, and PC+ABS which are thermoplastic resins.

4. The impeller for an electric blower as set forth in claim 1, wherein the top plate and the bottom plate are fixed to each other by inserting and coupling the blade coupled portion into the insertion groove of the top plate and fusing them.

5. An impeller for an electric blower, comprising:
a top plate;
a blade; and
a bottom plate,
wherein the top plate, the blade, and the bottom plate are integrally inj ection-molded.

6. The impeller for an electric blower as set forth in claim 5, wherein the top plate, the blade, and the bottom plate are made by selecting any one of PA, PEEK, PPS, PET, PP, PPA, FRPP, PC, and PC+ABS which are thermoplastic resins.

7. An apparatus for manufacturing the impeller for an electric blower as set forth in claim 5, comprising:
molds corresponding to shapes of a top plate, a bottom plate, and a blade of the impeller for an electric blower and connected with each other;
a cylinder connected to supply a raw material to the molds;
a screw provided in the cylinder;
a hopper connected to supply the raw material to the cylinder; and
a hydraulic motor for rotating the screw.

8. The apparatus for manufacturing an impeller for an electric blower as set forth in claim 7, wherein the mold includes:
a top plate forming portion corresponding to the top plate of the impeller for an electric blower;
a bottom plate forming portion corresponding to the bottom plate of the impeller for an electric blower; and
a blade forming portion corresponding to the blade for the impeller for an electric blower,
wherein the top plate forming portion and the bottom plate forming portion are connected to each other by the blade forming portion.

9. The apparatus for manufacturing an impeller for an electric blower as set forth in claim 7, wherein a heater for supplying a raw material supplied from the hopper to the mold in a melted state is mounted on an outer periphery of the cylinder.

10. The apparatus for manufacturing an impeller for an electric blower as set forth in claim 7, wherein the raw material is made by selecting any one of PA, PEEK, PPS, PET, PP, PPA, FRPP, PC, and PC+ABS which are thermoplastic resins.

11. The apparatus for manufacturing an impeller for an electric blower as set forth in claim 7, wherein a backflow prevention tab is formed on an inner periphery of the cylinder to protrude toward the screw so as to be adjacent to one end portion of the screw opposite to the mold.
